# FASCICULE DE BREVET EUROPEEN

(11) **EP 4 007 889 B1**
(45) Date de publication et mention de la délivrance du brevet: **30.08.2023**
(21) Numéro de dépôt: 20753998.2
(22) Date de dépôt: 20.07.2020
(51) Int. Cl.: G01B 17/02, B60T 8/172

(54) **MÉTHODE D'ESTIMATION DE LA HAUTEUR D'EAU SUR UNE CHAUSSÉE LORS DU ROULAGE D'UN PNEUMATIQUE**
VERFAHREN ZUR SCHÄTZUNG DES WASSERSTANDES AUF EINER FAHRBAHN BEI LAUFENDEM REIFEN
METHOD FOR ESTIMATING THE WATER LEVEL ON A ROADWAY WHEN A TYRE IS RUNNING

(30) Priorité: 01.08.2019 FR 1908820
(43) Date de publication de la demande: 08.06.2022
(73) Titulaire: COMPAGNIE GENERALE DES ETABLISSEMENTS MICHELIN, 63000 Clermont-Ferrand (FR)
(72) Inventeur: COTE, Rémi, 63040 CLERMONT-FERRAND Cedex 9 (FR); BREMOND, Florian, 63040 CLERMONT-FERRAND Cedex 9 (FR)
(74) Mandataire: Roussy, Delphine
(86) Numéro de dépôt international: PCT/FR2020/051306
(87) Numéro de publication internationale: WO 2021/019148

(56) Documents cités:
- WO-A1-2015/092253
- WO-A1-2017/198972
- DE-A1-102015 106 401
- FR-A1- 3 014 064
- NAAB K ET AL: "Sensor Systems and Signal Processing for Advanced Driver Assistance", 1 janvier 1996 (1996-01-01), SMART VEHICLES, SWETS & ZEITLINGER, LISSE, THE NETHERLANDS, PAGE(S) 69 - 97, XP009520919, ISBN: 978-90-265-1456-2 4. Friction potential monitoring; pages 78-82

## Description

### Domaine de l'invention

La présente invention concerne une méthode d'estimation de la hauteur d'eau sur une chaussée en temps réel où roule le pneumatique d'un véhicule.

### Arrière-plan technologique

Dans le domaine de la sécurité automobile, il est bien connu qu'une chaussée recouverte d'une couche d'eau de 0,2 millimètres de hauteur peut engendrer une dégradation de la condition d'adhérence du pneumatique sur la chaussée. On note une diminution de l'adhérence d'environ 30% par rapport à une route sèche dans certaines conditions. Ainsi, le véhicule roulant sur une chaussée humide voit sa distance de freinage augmentée considérablement. Néanmoins le conducteur de véhicule n'a pas toujours conscience du fait qu'une couche d'eau aussi fine diminue autant l'adhérence du véhicule. En effet, pour une épaisseur inférieure à 0,5 millimètre l'eau n'est pas pulvérisée à l'arrière des autres véhicules. En l'absence de cette brume, le conducteur a l'impression que la route est suffisamment sèche pour permettre au véhicule de rouler à une même vitesse que sur route totalement sèche.

De plus, les véhicules sont aujourd'hui équipés de nombreux dispositifs de sécurité ayant pour objectif d'avertir le conducteur d'une situation dangereuse voire de suppléer le conducteur. Il s'agit par exemple de dispositifs de commande automatique de la vitesse dits ACC (acronyme en anglais de Adaptative Cruise Control) ou encore de dispositif de gestion de la distance de sécurité du véhicule par rapport au véhicule précédent. Actuellement pour prendre en compte l'humidité de la route, les dispositifs de sécurité de type ACC se fondent sur la présence de projections d'eau sur le pare-brise pour adapter leur réaction à l'état de la route et accroître l'inter-distance avec le véhicule précédent. Mais lorsque le véhicule roule un sol humide avec une hauteur d'eau de moins de 0,5 millimètre, aucune éclaboussure d'eau n'atteint le pare-brise. Le dispositif de sécurité gère alors la conduite du véhicule comme s'il roulait sur une route sèche alors que l'adhérence a déjà fortement diminué.

On connait aussi d'autres capteurs pour mesurer la hauteur par émission d'un rayon infrarouge qui est réfléchi par le revêtement de la chaussée après avoir été réfracté par son passage au travers de la couche d'eau. Cependant, ces dispositifs métrologiques sont très sensibles à la couleur et la température du revêtement de la chaussée, ce qui les rendent peu précis pour une application quotidienne. De plus, en fonction de la rugosité du sol à une échelle millimétrique correspondant à la macrorugosité, la mesure de la hauteur d'eau obtenue est influencée par cette caractéristique.

On connait aussi des capteurs vibratoires placés sur une plaque souple qui se mettent à vibrer sous l'impact des éclaboussures générés par la mise en mouvement du pneumatique sur la chaussée humide. Cependant ces dispositifs, du fait de leur localisation vis-à-vis de la trajectoire des éclaboussures d'eau générées par le pneumatique en roulant, sont fragiles notamment sur des chaussées gravillonnées où le pneumatique peut emprisonner puis expulser un gravillon par l'intermédiaire du schéma de creux de sa bande de roulement. Ces capteurs sont basés sur le niveau vibratoire de la plaque excitée par les projections. L'analyse vibratoire est dans le domaine de fréquences basses et médiums compris entre 100 et 3000Hz sensibles aux déformations des panneaux du véhicule comme par exemple le passage de roue. Il est alors difficile d'isoler dans la réponse vibratoire ce qui est dû aux vibrations des panneaux généré par les excitations du véhicule de celles provenant des éclaboussures. Pour remédier à ce problème, le capteur est placé proche des éclaboussures et sur une plaque dédiée. FR 3 014 064 A1 montre une méthode d'estimation de la hauteur d'eau sur une chaussée à partir d'une fonction prenant en compte la vitesse du véhicule et des mesures accélérométriques réalisées par un microphone optique dans le domaine [100 Hz; 3 kHz] des vibrations engendrées par les projections d'eau sur une paroi solide.

L'invention consiste en un procédé d'estimation de la hauteur d'eau sur la chaussée où roule le pneumatique qui soit à la fois fiable, précis, ayant un pouvoir discriminant de l'ordre du dixième de millimètre de hauteur d'eau, peu sensible à la réponse du véhicule et peu intrusif pour le véhicule.

### Description de l'invention

L'invention porte tout d'abord sur une méthode d'estimation d'une hauteur d'eau sur une chaussée où roule un pneumatique d'un ensemble monté d'un véhicule, l'ensemble monté étant placé dans un passage de roue du véhicule, préférentiellement un passage de roue lié au premier essieu du véhicule par rapport au sens d'avancement classique du véhicule. La méthode comprend les étapes suivantes :
- Fixer un capteur sur le véhicule; de préférence en liaison avec le passage de roue.
- Obtenir un signal fréquentiel du capteur correspondant au roulage du véhicule à vitesse V sur la chaussée recouverte d'une hauteur d'eau heau ;
- Isoler une partie du signal fréquentiel, bornée par deux fréquences F1 et F2, F1 étant inférieure à F2, qui est sensible à la hauteur d'eau heau ;
- Déterminer un vecteur énergétique liée à la partie du signal fréquentiel;
- Obtenir la hauteur d'eau sur la chaussée à l'aide d'une fonction prenant en compte le vecteur énergétique et la vitesse V du véhicule ;
La méthode est caractérisée en ce que le capteur est un microphone et en ce que la partie du signal fréquentiel s'étend en totalité au-delà de 4 kHz, préférentiellement au-delà de 7 kHz et très préférentiellement au-delà de 10 kHz.

On entend ici par le terme **«hauteur d'eau** » l'épaisseur moyenne de la couche d'eau délimité d'une part par la surface libre de la couche d'eau avec l'air et d'autre part la surface externe de la chaussée. Ainsi, sur une chaussée parfaitement lisse à une échelle macroscopique de l'ordre du millimètre, la hauteur d'eau correspond à l'épaisseur de la couche d'eau uniformément répartie sur la surface externe de la chaussée. Et pour une chaussée rugueuse à une échelle millimétrique, appelée macrorugueuse, la hauteur d'eau correspond à l'épaisseur moyenne de la couche d'eau située au-dessus de la surface externe de la chaussée sur une étendue spécifique de la chaussée.

La méthode emploie comme capteur un microphone afin d'enregistrer la signature sonore de l'interaction entre la couche d'eau et le pneumatique jusqu'à plusieurs milliers de Hertz, et non pas la seule signature vibratoire d'un panneau soumis à l'excitation des éclaboussures qui est bornée à 3000Hz ou 4000 Hz. Ainsi le phénomène comprend différents événements comme le remplissage d'eau par le schéma de creux de la bande de roulement du pneumatique, son expulsion du schéma de creux, la projection des gouttelettes d'eau dans l'air, l'impact de ces gouttelettes d'eau sur la paroi du passage de roue et le rayonnement acoustique de ce panneau qui se met à vibrer. De plus, la signature sonore du déplacement de l'eau aussi bien le flux, comme le front devant le pneumatique qui se déplace à la vitesse du véhicule ou les vagues d'évacuation de l'eau sur les côtés du pneumatique, que le reflux qui a lieu sur l'arrière du pneumatique sur les fortes hauteurs d'eau sont aussi des sources acoustiques du phénomène physique. L'ensemble de ces phénomènes sont dépendants de la quantité d'eau mis en mouvement par l'interaction avec le pneumatique, ils sont liés directement à la hauteur d'eau sur la chaussée assurant la précision de la méthode.

La méthode se focalise sur une bande de fréquences située dans les hautes fréquences en totalité au-dessus de 4 KHz où la transmission aérienne du bruit est majoritaire par rapport à la transmission solidienne ou vibratoire du véhicule minimisant ainsi la réponse vibro acoustique des panneaux et mettant en évidence les autres phénomènes. Et, la sensibilité de la réponse sonore dans les hautes fréquences est plus élevée que celle de la réponse vibratoire en basses et moyennes fréquences. De plus, cette bande de fréquences met en évidence les événements acoustiques de l'interaction entre le pneumatique et la couche d'eau. La sélection d'une bande de fréquences sensible à la hauteur d'eau où les événements physiques de l'interaction entre la couche d'eau et le pneumatique auront une réponse sonore émergente renforce la fiabilité et la précision de la méthode. Cependant, le phénomène physique sera plus mis en exergue à des fréquences plus élevées en raison du niveau sonore du véhicule qui décroit avec la fréquence. Ainsi, la sensibilité de la méthode se trouve améliorée en isolant des massifs dans les plus hautes fréquences. Préférentiellement, la bande de fréquences est située dans les hautes fréquences en totalité au-dessus de 7 KHz, très préférentiellement-au dessus de 10 KHz.

Le fait de sélectionner une bande de fréquences comprises entre deux bornes F1 et F2, F1 étant inférieure à F2, permet de comparer les réponses sonores entre elles et donc d'estimer la hauteur d'eau sur la chaussée.

Cependant afin de renforcer la précision de la méthode en limitant l'impact de la décroissante sonore classique d'un véhicule, il est utile de construire un signal fréquentiel redressé en comparant le signal fréquentiel du capteur avec une courbe caractéristique du signal fréquentiel qui intègre la décroissance de la signature fréquentielle du véhicule.

La localisation du capteur sur le véhicule et en particulier au sein du passage de roue améliore aussi la fiabilité de la méthode. En effet, en raison de sa forme, une surface concave, le passage de roue joue un rôle d'amplification des sources acoustiques du phénomène par le confinement des ondes acoustiques dans un faible volume. De plus des réflexions de ces ondes dans cet espace confiné concentrent l'énergie acoustique dans cet espace. Enfin, le passage de roue est une zone de protection du capteur par rapport à d'autres sources sonores comme par exemple l'écoulement aérodynamique de l'air autour du véhicule au cours du roulage.

La présence de la couche d'eau sur la chaussée quelle que soit la nature rugueuse du sol assure un même traitement des ondes acoustiques par cette surface. Ainsi, la précision de la méthode est renforcée. De plus l'intrusion d'un microphone dans le passage de roue est aisée en profitant de la fine paroi du passage de roue pour pouvoir placer les éléments non actifs du capteur comme les branchements d'alimentation de l'autre côté du passage de roue évitant ainsi de mettre la plus grande partie du capteur en contact avec l'eau. Enfin, la localisation du capteur est au plus proche des sources acoustiques du phénomène physique tout en étant protégé physiquement par la structure du véhicule. Le microphone peut se situer intégralement derrière la paroi du passage de roue dans ce cas le signal reçue sera atténuée par l'isolation acoustique du passage de roue et il est préférable de situer la partie active du microphone à proximité de la paroi. Mais la partie active du microphone peut aussi être placé dans le volume délimité par le passage de roue où se trouve l'ensemble monté, il est alors préférable de dissimuler la partie active du capteur derrière une paroi présentant une multitude de perforations. Ces perforations sont dimensionnées pour protéger la partie active du capteur vis-à-vis des gouttelettes d'eau tout en laissant passer, sans les perturber, les ondes acoustiques. La gamme de hautes fréquences utilisées est favorable à ce double effet de la paroi perforée.

La détermination d'un massif se fait par l'intermédiaire du signal fréquentiel redressé. L'analyse de ce signal fréquentiel redressé permet de déterminer des massifs par la comparaison du signal fréquentiel par rapport à la courbe caractéristique de la réponse acoustique en fréquence du véhicule. Ensuite pour chaque massif déterminé, il convient d'évaluer une valeur caractéristique du massif. Enfin, il suffit d'évaluer cette valeur caractéristique par rapport à un seuil prédéfini pour savoir si la bande de fréquences associée au massif est retenue ou non dans la partie du signal fréquentiel. Dans l'affirmatif, la bande en fréquences du massif est sélectionnée pour isoler le signal fréquentiel sur cette bande de fréquences afin de constituer une séquence de la partie du signal fréquentiel. Nécessairement, la partie du signal fréquentiel est bornée par les extremums des bandes de fréquences sélectionnées sur le signal fréquentiel redressé.

A partir du signal fréquentiel borné que l'on a isolé, il est possible de déterminer une série de critères énergétiques qui alimenteront un vecteur énergétique. Ce vecteur énergétique est défini sur au moins une dimension. Le choix d'un critère énergétique est dû aux phénomènes physiques que l'on cherche à appréhender. Dans le domaine des hautes fréquences où le phénomène physique opère, l'énergie est l'indicateur le plus discriminant.

Enfin, la vitesse de roulage a pour impact de multiplier la quantité d'eau en mouvement due à l'interaction avec le pneumatique. La vitesse du véhicule modifie aussi les conditions des événements physique de l'interaction en augmentant par exemple la quantité d'eau mise en mouvement ou la vitesse de propagation des gouttes d'eau éjectées du pneumatique ce qui augmentent directement l'énergie d'impact de ces éclaboussures sur la paroi du passage de roue. Par conséquent, la prise en compte de la vitesse de roulage du véhicule est indispensable à une estimation précise de la hauteur d'eau sur la chaussée. En effet la vitesse influence directement plusieurs événements du phénomène physique.

La détermination de la hauteur est obtenue par l'intermédiaire d'une fonction, par exemple une fonction de corrélation, liant la hauteur d'eau, le vecteur énergétique et la vitesse du véhicule ce qui est pertinent pour des faibles hauteurs d'eau quel que soit l'état du pneumatique pour des pneumatiques sculptés et ce quel que soit la nature macrorugueuse de la chaussée. La fonction est liée au véhicule ou à une famille du véhicule à laquelle le véhicule est apparenté. En effet, la mesure sonore s'effectue à l'extérieur du véhicule à proximité de l'ensemble monté. Quelle que soit le véhicule automobile, ces passages de roue existent et leurs dimensions est quasi similaires. Cependant, certains véhicules présentent des particularité au niveau de ces passages de roue comme l'absence d'insonorisation pour les véhicules bon marché, ou comme leur garde au sol qui influence l'effet de haut-parleur du passage de roue.

Préférentiellement, le signal fréquentiel obtenu est la Densité Spectrale de Puissance, nommée DSP, d'un signal temporel discrétisé du capteur acquis lors du roulage du véhicule.

Avantageusement, le vecteur énergétique comprend la fonction intégrale de la DSP, éventuellement redressée, entre les fréquences F1 et F2.

C'est une façon rapide et peu coûteuse d'obtenir la réponse acoustique du phénomène où la fréquence d'échantillonnage du signal temporel doit être supérieure à 8 KHz. Le roulage sur une chaussée humide d'un pneumatique n'est pas un phénomène éphémère, la durée de ce roulage est longue par rapport à l'acquisition du signal temporel. Bien entendu, plus ce signal est long, plus statiquement on a la possibilité d'écarter des phénomènes transitoires qui perturberait la réponse acoustique. Etant donné que le phénomène physique est continûment cyclique et que l'acquisition du signal temporel n'est qu'une extraction d'une partie de ce phénomène physique, la densité spectrale de puissance est un bon outil pour extraire une information énergétique du signal qui soit pertinente.

Le vecteur énergétique comprend par exemple la sommation des produits obtenus par l'amplitude de la DSP discrétisée par le pas de fréquence entre les valeurs discrètes contigus pour toutes les valeurs discrètes de la réponse sonore retenues entre F1 et F2. Bien entendu d'autres critères énergétiques plus élémentaires construits par exemple sur la partie réelle ou la partie imaginaire du signal fréquentiel ou construit à partir d'un signal fréquentiel correspondant à la réponse temporelle sur un nombre fini de cycles du phénomène physiques peuvent être employés.

Bien entendu, si la partie du signal fréquentiel est définie par morceaux, il convient d'effectuer l'analyse sur chaque morceau continue et de sommer l'énergie de l'ensemble des morceaux.

Selon un mode de réalisation particulier, la partie du signal fréquentiel se limite à au moins un massif dont une valeur caractéristique est supérieure à un seuil relatif au signal fréquentiel.

En focalisant l'analyse de la réponse sonore à un ou des massifs en particulier, on améliore la sensibilité de la méthode et de ce fait, le pouvoir discriminant de la méthode en ne retenant que les massifs ayant la plus forte sensibilité à la hauteur d'eau. Cette sélection du ou des massifs s'effectuent à l'aide d'une métrique, la valeur caractéristique du massif et d'un seuil en lien avec cette métrique .Le seuil est nécessairement lié au signal fréquentiel puisque celui-ci est non constant. Ceci permet de ne retenir que les massifs offrant un poids sonore important par rapport à la réponse globale du véhicule.

La sélection d'un massif permet de rendre robuste le procédé puisque l'estimation de la hauteur d'eau sera moins impactée par un signal ponctuel lié à la signature du véhicule par exemple. De plus, le procédé est bien plus sensible aux phénomènes physiques qui sont plus large bande que l'on cherche à isoler. Ainsi, la fiabilité du procédé est nettement améliorée.

Selon un mode de réalisation spécifique, l'étape pour isoler une partie du signal fréquentiel comprend la construction d'un signal fréquentiel redressé comme étant la comparaison entre le signal fréquentiel et une courbe caractéristique du signal fréquentiel.

Afin de faciliter la sélection des massifs pour construire la partie du signal fréquentiel, il est préférable de construire un signal fréquentiel redressé afin d'apporter un poids équivalent des divers massifs de la réponse sonore en prenant en compte la décroissance du niveau sonore du véhicule proportionnelle à la fréquence. Il convient alors de comparer le signal fréquentiel mesuré à la courbe caractéristique de décroissance pour obtenir un spectre fréquentiel redressé du niveau sonore du véhicule. Cette comparaison peut être faite soit la différence ou le rapport entre les deux éléments de la comparaison

Selon un mode de réalisation très spécifique, la courbe caractéristique du signal fréquentiel est une courbe continûment décroissante en fonction de la fréquence au-delà de 4KHz.

C'est un modèle élémentaire suffisant pour identifier les massifs et qui peut être obtenu simplement par une simple régression linéaire par morceaux du signal fréquentiel pourvu que l'une des bornes d'un morceau soit voisin de 4 KHz. La décroissance naturelle du signal sonore du véhicule facilité l'identification de la pente de la courbe caractéristique. Une identification sur une réponse sonore sur route sèche peut suffire à cette évaluation. En revanche, il conviendra d'identifier un point caractéristique sur le signal sonore de mesure que l'on ne nommera point de référence à 4 KHz pour déterminer complètement la courbe caractéristique. En effet, l'amplitude sonore de ce point caractéristique dépend à la fois de la vitesse de roulage du véhicule mais aussi de la hauteur d'eau voire de la nature du sol. Ce point caractéristique peut être la valeur de la réponse sonore à 4 KHz ou la moyenne des discrétisations du signal fréquentiel sur une bande de fréquences autour de 4Khz.

Très avantageusement, le au moins un massif du signal fréquentiel redressé est délimité par le franchissement d'une valeur spécifique par le signal fréquentiel redressé.

En effet, la réponse sonore du véhicule que celui-ci roule sur une chaussée sèche ou recouverte d'eau est décroissante en fréquence. Dans le cas d'une représentation en échelle logarithmique de la réponse sonore du véhicule, la courbe caractéristique du véhicule s'apparente à une courbe linéaire ou linéaire par morceaux au-delà d'une fréquence de 4kHz. Cette décroissance est caractéristique de la réponse acoustique du véhicule. Afin d'identifier la pente de cette courbe caractéristique, on peut par exemple utiliser une méthode de régression linéaire sur un spectre sonore du véhicule en condition de roulage quelque soient la chaussée et le caractère humide ou sec du revêtement. Pour construire la courbe caractéristique associée au signal fréquentiel, il suffit alors de caler le point de départ de la courbe sur le signal fréquentiel.

Le signal fréquentiel redressé sera alors obtenu, sous une échelle logarithmique, sous la forme de la différence entre le signal fréquentiel et la courbe caractéristique du signal fréquentiel. Deux passages contigus par la valeur spécifique nulle du signal fréquentiel redressé, exprimé en échelle logarithmique, délimite un massif du signal fréquentiel redressé. Dans le cas d'une représentation en échelle linéaire du signal fréquentiel, la construction du signal fréquentiel redressée est effectuée par le rapport entre le signal fréquentiel et la courbe caractéristique, toutes les deux en échelle linéaire. Et la valeur spécifique pour délimiter les massifs du signal fréquentiel redressé est la valeur unité.

Selon un mode de représentation spécifique, la valeur caractéristique du au moins un massif est comprise dans le groupe comprenant valeur maximale, valeur moyenne, valeur médiane.

Afin de retenir la bande de fréquences d'un massif du signal fréquentiel, il convient de classifier le massif du signal fréquentiel. Ce classement passe d'abord par l'évaluation d'une métrique caractéristique du massif du signal fréquentiel. Une métrique simple comme la valeur maximale du signal fréquentiel ou sa valeur moyenne ou médiane sur la bande de fréquence du massif sont adaptées pour caractériser le massif. Cette étape est très efficace sur le signal fréquentiel redressé.

Ces valeurs caractéristiques peuvent aussi bien être exprimées en échelle linéaire qu'en échelle logarithmique ou tout autre type de représentation du signal fréquentiel.

Selon un mode de réalisation très spécifique, le signal fréquentiel étant exprimé en échelle logarithmique, le seuil est la valeur 3dB, préférentiellement la valeur 4dB, très préférentiellement la valeur 5dB.

Ces seuils montrent une différence notable du massif par rapport à la réponse sonore du véhicule. De ce fait, le poids de ce massif dans l'énergie sonore de la réponse du véhicule est élevé. De ce fait, si la valeur caractéristique du massif est au-dessus de ce seuil, il convient de retenir la bande de fréquences du massif pour délimiter une séquence de la partie du spectre fréquentiel. Le vecteur énergétique est alors sensible à la hauteur d'eau. Cette étape est très efficace sur le signal fréquentiel redressé.

Avantageusement, une sensibilité des bandes de fréquences du signal fréquentiel à la hauteur d'eau est effectuée dans une étape d'apprentissage où le véhicule équipé du microphone roule sur une chaussé présentant au moins deux hauteurs d'eau différentiables.

Il est utile que les roulages soient effectuées sur des hauteurs d'eau différentiables et maitrisées, de l'ordre du dixième de millimètres, afin d'évaluer la capabilité de la méthode à détecter une telle différence. Préférentiellement, le véhicule roule dans des conditions de roulage similaires : vitesse linéaire, charge dynamique du véhicule, vent, température ambiante sur un même sol ou sur un sol de nature équivalente. De plus, il est nécessaire d'effectuer cette étape de sensibilité sur diverses gammes de vitesse de roulage. Cette étude de sensibilité permet d'identifier la fonction de corrélation permettant d'identifier la hauteur d'eau à partir de la vitesse de roulage et des critères énergétiques liés à la partie du signal fréquentiel sensible à la hauteur d'eau. Cela correspond ainsi à un étalonnage du signal fréquentiel et des critères énergétiques associés par bande de fréquences du signal fréquentiel à la hauteur d'eau sur la chaussée.

Selon un mode de réalisation très spécifique, le pneumatique comprenant un vecteur d'identification, la méthode comprend une étape d'obtention de l'identification du pneumatique afin d'obtenir au moins une caractéristique géométrique du pneumatique, et la fonction de l'étape l'obtention de la hauteur d'eau prend en compte la au moins une caractéristique géométrique dudit pneumatique.

Le pneumatique est équipé d'au moins un vecteur d'identification dans son état neuf par exemple au travers d'une étiquette. Il peut aussi contenir un vecteur d'identification qui le suit au cours de sa durée de vie sous la forme d'une vecteur physique et visible qui lui est attachée comme un code à barre, un QRcode ou un vecteur invisible comme une dispositif électronique de type étiquette RFID ( acronyme en anglais de « Radio Frequency IDentification ») ou capteur TMS ( acronyme en anglais de « Tire Mounted Sensor »). L'ensemble de ces vecteurs d'identification ont comme contenu l'identification du pneumatique. Cette identification du pneumatique peut aussi être disponible directement sur le véhicule au travers d'une saisie manuelle, optique ou radiofréquence de ces différents vecteurs. A partir de cet identification, un certain nombre de caractéristiques du pneumatique et en particulier des caractéristiques géométriques sont accessibles. On peut ainsi avoir accès aux dimensions du pneumatique dont la largeur du pneumatique qui influencera directement la largeur de la zone d'éjection et de la zone d'impact des gouttelettes d'eau. On peut aussi avoir accès à la géométrie du schéma de creux de la bande de roulement du pneumatique qui modifiera aussi la projection et la zone d'impact des gouttelettes d'eau emprisonnées dans le schéma de creux du pneumatique lors du roulage sur la chaussée mouillée. Par exemple, un pneumatique de type été présente comme schéma de creux principal, des sillons longitudinaux qui générera majoritairement une projection longitudinale des gouttelettes d'eau par ces sillons. En revanche un pneumatique hiver présentera comme schéma de creux une succession de creux en forme de V qui généreront aussi des projections d'eau à 45 degrés modifiant ainsi la zone d'impact des gouttelettes d'eau sur la paroi du passage de roue.

Selon un mode de réalisation préférentiel, la méthode comprend une étape d'obtention de l'état d'usure du pneumatique et la fonction d'obtention de la hauteur d'eau prend en compte l'état d'usure du pneumatique.

Si on prend en compte les caractéristiques géométriques liées au schéma de creux de la bande de roulement, il faut aussi s'intéresser à l'état d'usure du pneumatique qui se traduit par une variation moyenne de la hauteur de la bande de roulement du pneumatique. L'usure commence nécessaire par rogner la surface externe de la bande de roulement. Elle peut influencer les caractéristiques géométriques du schéma de creux comme, par exemple, la zone d'expulsion des gouttelettes d'eau par l'apparition de nouveaux éléments du schéma de creux initialement cachés à l'état neuf ou le volume d'eau éjecté par la saturation du schéma de creux disponible en raison de l'usure de la bande de roulement.

Cet état d'usure du pneumatique peut être obtenu par des dispositifs situés dans le pneumatique comme par exemple des capteurs résistifs ou capacitifs dans la bande de roulement ou des dispositifs externes au pneumatique comme des scanners drive over ou une mesure manuelle lors d'un contrôle du véhicule dont l'information a été communiqué au véhicule ou sur un serveur en l'associant à l'identification du pneumatique. Par conséquent la prise en compte de l'état d'usure du pneumatique dans la fonction liant la hauteur d'eau sur la chaussée aux autres paramètres peut être nécessaire pour certain pneumatique comme par exemple ceux présentant des creux dissimulés dans la bande de roulement qui émergent au cours de l'usure du pneumatique. La modification du schéma de creux avec l'usure du pneumatique influence alors la signature sonore du phénomène physique. De plus, l'usure du pneumatique a une dynamique temporelle lente par rapport aux variations de la hauteur d'eau sur la chaussée. Cette étape d'obtention de l'état d'usure du pneumatique peut donc être effectuée bien avant les mesures pour l'évaluation de la hauteur d'eau sur la chaussée.

Selon un autre mode de réalisation préférentiel, la méthode comprend une étape d'obtention de la texture de la chaussée, préférentiellement la PMT (acronyme de Profondeur Moyenne de Texture) du sol à une échelle millimétrique, et la fonction d'obtention de la hauteur d'eau prend en compte la texture de la chaussée.

C'est l'un des paramètres pouvant influencer l'évaluation de la hauteur d'eau sur la chaussée. A cet effet, la macrotexture du sol, c'est à dire la texture à une échelle millimétrique est suffisante pour qualifier la chaussée vis-à-vis de son interaction avec l'eau. La PMT peut être évaluée selon la Norme NF EN 13036-1.

La texture de la chaussée peut être renseignée par exemple à l'aide d'une cartographie de la texture des routes associés à la position du véhicule via par exemple une indication GPS (acronyme en anglais de Global Position System). On peut aussi employer le dispositif présenté dans la demande WO2015092253A1, incluant aussi un microphone sur le véhicule, permettant de remonter à une classe de l'état de la texture de la chaussée. L'influence de la texture de la chaussée sur l'évaluation de la hauteur d'eau étant secondaire, une information qualitative et non quantitative de la texture de la chaussée est suffisante pour intégrer une correction forfaitaire par classe de texture sur l'évaluation de la hauteur d'eau. Enfin, l'étape d'obtention de la texture de la chaussée peut aussi correspondre à l'analyse d'un spectre de bruit, enregistré par un microphone monté sur le véhicule au plus près de la chaussée, par exemple, le passage de roue ou le parechoc, sur une bande de fréquences inférieures à 4KHz, par exemple entre 200 et 2000Hz ou 500 et 1000Hz. Ce spectre de bruit est représenté par un niveau moyen, exprimé par exemple à l'aide de la valeur RMS ( acronyme en anglais de Root Mean Square). Selon le niveau qualitatif de ce niveau moyen et la connaissance de la vitesse du véhicule, il est possible d'en déduire une classe de la texture de la route même par sol mouillé.

Selon un mode de réalisation spécifique, la fixation du capteur a lieu au niveau du passage de roue , plus spécifiquement la fixation du capteur a lieu dans la partie arrière du passage de roue par rapport au plan OYZ de l'ensemble monté, préférentiellement dans un secteur angulaire compris entre 270° et 315° par rapport à l'axe Y du repère géométrique du pneumatique.

On entend ici par le terme repère géométrique du pneumatique nommée OXYZ, le repère associé au pneumatique constitué par un centre O situé à l'intersection de l'axe naturel de rotation du pneumatique et du plan médian du pneumatique. Ce repère comprend un axe Z, ou axe vertical, correspondant à la direction verticale par rapport au sol où roule le pneumatique, un axe X, nommé axe longitudinal, dirigé dans le sens de déplacement du pneumatique en roulage ligne droite qui est perpendiculaire à l'axe Z et parallèle au sol et un axe Y, ou axe transversal, dirigé selon l'axe naturel du pneumatique qui est perpendiculaire aux axes X et Z pour constituer un repère orthogonal direct fixe lié au pneumatique.

Ce positionnement préféré du microphone a l'avantage de positionner le microphone loin de la zone d'impact des gouttelettes d'eau sur la paroi du passage de roue tout en étant proche de cette source ainsi que des autres sources sonores. L'éloignement permet de s'assurer de l'intégrité physique du capteur notamment en cas d'éjection de graviers ou objet solide par le schéma de creux de la bande de roulement. La proximité avec les autres sources sonores permet de ne pas masquer leur réponse par rapport à celui de l'impact des gouttelettes d'eau.

### Description brève des dessins

L'invention sera mieux comprise à la lecture de la description qui va suivre. Cette application est donnée uniquement à titre d'exemple et faite en se référant aux figures annexées dans lesquelles :
- La Fig 1 présente un synoptique des étapes de la méthode d'obtention de la hauteur d'eau.
- Les Fig 2a, Fig 2b et Fig 2c présentent des réponses sonores d'un même véhicule roulant sur une même hauteur d'eau équipés de pneumatiques soit différents par les caractéristiques soit différents par leur état d'usure soit identiques mais roulant sur deux sols différents.
- La Fig 3a présente des réponses sonores d'un véhicule roulant sur une même hauteur d'eau équipé des mêmes pneumatiques à deux vitesses de roulage différentes.
- La Fig 3b présente des réponses sonores d'un véhicule roulant sur des hauteur d'eau différentes équipé des mêmes pneumatiques à une même vitesses de roulage.
- La Fig 4 présente un signal fréquentiel redressé avec identification des massifs.
- La Fig 5 illustre la méthode de qualification des massifs sur le spectre fréquentiel redressé.
- La Fig 6 illustre l'obtention de la classe de la texture de la chaussée à partir d'une grandeur sonore.

### Description détaillée de modes de réalisation

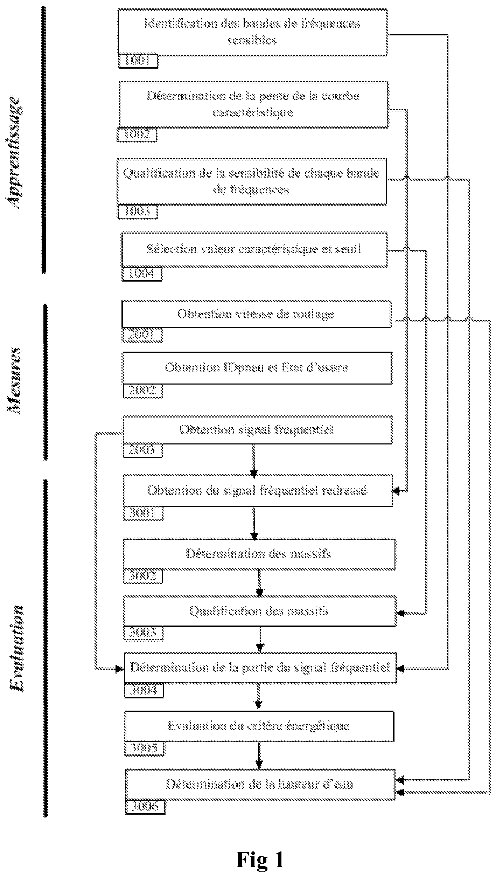

La Fig 1 présente un synoptique de la méthode d'évaluation de la hauteur d'eau sur la chaussée 1000. Celle-ci se décompose en trois phases principales. Une première phase d'apprentissage consistant à effectuer l'identification de certains paramètres. Une seconde phase de mesures sur véhicule consistant à récupérer les informations utiles à l'évaluation de la hauteur d'eau sur la chaussée où roule le véhicule. Et enfin, une troisième phase d'évaluation consistant à déterminer la hauteur d'eau à partir des informations récoltées au cours des deux phases précédentes.

La phase d'apprentissage consiste tout d'abord à identifier les bandes de fréquences sensibles à la hauteur d'eau 1001 dans la réponse sonore du véhicule. Cette étape consiste à obtenir les spectres de bruit mesurés par le microphone fixé au véhicule lorsque le véhicule, équipé d'un ensemble monté de référence, roule sur une chaussée présentant diverses hauteurs d'eau connues. Pour la connaissance des hauteurs d'eau, il suffit d'employer un moyen de mesure de type laboratoire connu de l'état de la technique qui servira d'étalon. Peu importe la nature rugueuse de la chaussée ou circule le véhicule, en particulier à une échelle millimétrique. Peu importe la nature et l'état du pneumatique dont est équipé le véhicule. En effet, ces paramètres sont du second ordre pour la réponse sonore du véhicule à la hauteur d'eau sur la chaussée.

Ces divers spectres permettent tout d'abord et de façon optionnelle de déterminer la pente de la courbe caractéristique au-delà de 4kHz selon l'étape 1002. Pour cette détermination, une simple régression linéaire du spectre sur la bande de fréquences complète du spectre ou par morceaux de bande de fréquences est effectuée. On peut effectuer cette détermination selon une seule condition de roulage du véhicule ou effectuer une moyenne selon les diverses conditions de roulage testées.

En ayant effectué des mesures sous diverses conditions de hauteur d'eau, il est possible d'identifier les bandes de fréquences présentant une forte sensibilité de réponse, en particulier au niveau de l'amplitude de la réponse sonore, selon la hauteur d'eau de la chaussée. Le résultat de cette étape 1001 est à conserver pour la phase d'évaluation.

Enfin, en ayant à la fois observé la variation selon la hauteur mais aussi à l'ordre un selon la vitesse de roulage, il est possible de qualifier la sensibilité à ces deux paramètres de chacune des bandes de fréquences sensibles selon l'étape 1003 en employant les critères énergétiques de l'étape 3003. A l'ordre deux, il est utile de qualifier la sensibilité des bandes de fréquences selon les caractéristiques du pneumatique et l'état d'usure du pneumatique dans un mode plus fin d'évaluation de la hauteur d'eau. A l'ordre trois et dans un mode idéal, il est utile d'évaluer la sensibilité des bandes de fréquences selon la rugosité de la chaussée sur laquelle roule le pneumatique.

On créé alors une fonction multilinéaire des divers paramètres dont au moins la hauteur d'eau et la vitesse de roulage décrivant de façon continue le vecteur énergétique de l'étape 3003 et passant par les points mesurés à cette étape 1003. Cette fonction servira à l'étape 3006 pour déterminer la hauteur d'eau sur la chaussée en fonction de la vitesse de roulage du véhicule et du vecteur énergétique associé à la réponse sonore du véhicule.

Enfin, l'étape 1003 nécessite de définir les conditions pour les critères énergétiques de l'étape 3003 afin de sélectionner les massifs utiles à l'analyse. De ce fait, on réalise l'étape 1004 consistant à sélectionner par rapport au signal fréquentiel du véhicule, les valeurs caractéristiques et les seuils des divers massifs, du futur signal fréquentiel redressé par exemple, qui serviront à la phase d'évaluation en mode d'investigation.

La deuxième phase consiste à obtenir les informations sur le véhicule au moment où le véhicule roule sur une chaussée quelconque dans un état humide sans que la hauteur d'eau soit connue.

Dans une première étape 2002 optionnelle, il convient d'identifier le pneumatique dont est équipé le véhicule et d'obtenir une information sur l'état d'usure de celui-ci. Cependant ces données sont accessoires et seulement nécessaires pour améliorer la précision de l'évaluation finale de la hauteur d'eau. En revanche, il est nécessaire d'évaluer la vitesse de roulage du véhicule au moment de la mesure sur la chaussée humide selon l'étape 2001. Une valeur moyenne de la vitesse sur le temps d'acquisition du signal sonore est suffisante.

La troisième phase est la phase d'évaluation qui a lieu en embarqué sur le véhicule au travers d'un processeur muni d'un espace mémoire et de moyens de communications vers le microphone ou d'autres organes du véhicule en particulier le pneumatique. Ces moyens de communication peuvent par exemple être un émetteur récepteur radiofréquence pour communiquer avec une étiquette RFID liée au pneumatique ou un capteur TMS installé sur le pneumatique ou un capteur TPMS installé sur l'ensemble monté. Ces moyens de communication peuvent aussi être une liaison filaire avec le microphone ou le bus CAN du véhicule. Ainsi le processeur peut récupérer d'une part toutes les informations utiles lors de la phase d'apprentissage comme par exemple, les bandes de fréquences sensibles, la pente de la courbe caractéristique, les valeurs caractéristiques et les seuils de chaque bande de fréquences sensibles. D'autre part, le processeur peut récupérer la vitesse de roulage du véhicule mais aussi potentiellement l'identification ou les caractéristiques géométrique du pneumatique équipant le véhicule ainsi que l'état d'usure de ce dernier au travers du kilométrage parcouru par le pneumatique par exemple.

Une première étape optionnelle de la phase d'évaluation consiste à créer le signal fréquentiel redressé. Pour cela, combiner le signal fréquentiel de la phase de mesure à la courbe caractéristique du véhicule. Mais, la courbe caractéristique est définie par deux paramètres. D'une part, la courbe caractéristique passe par un niveau d'amplitude à la fréquence de 4KHz qui est fonction de la hauteur d'eau et de la vitesse de roulage et d'autre part, la pente de la courbe caractéristique qui est indépendante de la hauteur d'eau. Ce second paramètre a été évalué lors de la phase d'apprentissage à l'étape 1002. Il convient donc à partir du signal fréquentiel obtenu à l'étape 2003, définir le niveau d'amplitude à une fréquence donnée comme par exemple à 4Khz. Pour cela, une méthode consiste à linéariser le signal fréquentiel autour des fréquences d'échantillonnage du signal fréquentiel. Une autre méthode consiste à définir cette amplitude comme la valeur moyenne du signal fréquentiel sur une bande de fréquence autour de la fréquence cible de 4 KHz.

Selon que l'on travaille soit en échelle linéaire, soit en échelle logarithmique, la comparaison consiste soit à effectuer le rapport du signal fréquentiel sur la courbe caractéristique soit à effectuer la différence entre les deux courbes. Ainsi, on obtient le signal fréquentiel redressé suivant l'étape 3001.

La seconde étape 3002 consiste à identifier les massifs du signal , fréquentiel, optionnellement du signal fréquentiel redressé, au-delà de 4KHz. Pour cela, le signal fréquentiel étant échantillonné, il convient de comparer chacun des échantillons par rapport à une valeur. Pour le signal fréquentiel redressé, dans le cas où on travaille en échelle linéaire, cette valeur spécifique est la valeur unité. Dans le cas où on travaille en échelle logarithmique, la valeur spécifique est la valeur nulle. Un simple comparateur entre les échantillons contigus permet d'identifier le passage du signal fréquentiel redressé par rapport à cette valeur spécifique. Lorsque ce passage se traduit par un dépassement au-dessus de la valeur spécifique, cela correspond au premier point d'un massif. Le dernier point du massif sera déterminé par un nouveau passage du signal fréquentiel redressé en dessous de la valeur spécifique. Ainsi, il est possible d'identifier tous les massifs du signal fréquentiel redressé qui sont des réponses du signal fréquentiel redressé au-dessus de la valeur spécifique.

L'étape 3003 consiste alors à qualifier le massif identifié. L'objectif est de ne retenir que des massifs ayant une forte sensibilité à la hauteur d'eau et dont la réponse sonore est significative par rapport à la réponse sonore du véhicule. Bien entendu, pour ce second aspect il est plus aisé de se focaliser sur le signal fréquentiel redressé pour ne pas exclure les massifs en hautes fréquences.

Cette étape 3003 consiste premièrement à affecter une métrique au massif qui soit représentative de l'énergie sonore du massif en évitant de mettre trop en avant des phénomènes très localisés dans le domaine fréquentiel. A cet effet, la valeur maximale du massif sur la bande de fréquence du massif est un premier indicateur. Cependant, il ne reflète pas forcément assez la forme du massif, c'est pourquoi une valeur moyenne ou une valeur médiane du massif lui sera préférée dans un mode de réalisation spécifique.

Ensuite, il faut positionner cette métrique par rapport à un seuil afin de ne sélectionner que les massifs ayant une forte contribution sur la réponse sonore du véhicule. Cela permet d'améliorer la sensibilité de la méthode et d'augmenter le pouvoir séparateur de la méthode. A cet effet, si une représentation de la réponse sonore du véhicule est faite en échelle logarithmique, il est utile d'employer comme seuil une valeur d'au moins 3dB qui représente un doublement de la puissance sonore du massif ce qui est significatif. Bien entendu, on peut encore augmenter ce seuil pour réduire l'analyse à quelques massifs de la réponse sonore pour augmenter le pouvoir séparateur ou discriminatoire de la méthode.

L'étape 3004 suivante est une sélection des massifs les plus significatifs de l'étape 3003 en matière de puissance sonore en lien avec les bandes de fréquences sensibles à la hauteur d'eau identifiées à l'étape 1001. Ainsi, on ne retient que les bandes de fréquences des massifs qui sont à la fois audibles par rapport à la réponse du véhicule et sensibles à la hauteur d'eau. Idéalement on ne retient qu'un unique massif mais il est tout à fait possible de sélectionner plusieurs d'entre eux. A la fin de cette étape 3004, on a sélectionné la partie du signal qui servira à la détermination de la hauteur d'eau.

L'étape 3005 consiste à créer un vecteur énergétique à partir de la partie du signal sélectionné à l'étape précédente. Dans le cadre de notre invention, la densité spectrale de puissance est tout à fait bien indiquée en matière de signal fréquentiel. Le vecteur énergétique comprend alors la fonction intégrale de cette densité spectrale de puissance sur la partie du signal, que celui-ci soit le signal fréquentiel issus du microphone ou le signal fréquentiel redressé. En effet, la fonction intégrale est un indicateur de l'énergie acoustique associée à une bande de fréquences d'une réponse sonore. Bien entendu, si la partie du signal fréquentiel est découpée en plusieurs morceaux, il est possible de calculer pour chaque morceau continu en fréquence une fonction intégrale de la réponse sur la bande de fréquences délimitant chaque morceau. Ensuite, chaque fonction intégrale peut être un élément du vecteur énergétique. Il est aussi possible de combiner entre eux les divers éléments du vecteur énergétique en leur affectant un poids spécifique à chacun afin de ne gérer qu'un seul élément. La fonction intégrale de la partie du signal fréquentiel sera évaluée sous une représentation du signal sonore en échelle linéaire.

Enfin, l'étape 3006 consiste à partir du vecteur énergétique de l'étape 3005, de la vitesse de roulage du véhicule obtenue à l'étape 2001 à évaluer la hauteur d'eau heau sur la chaussée où roule le véhicule. En effet, lors de l'étape 1003, une quantification des diverses bandes de fréquences sensibles à la hauteur d'eau a été faite en faisant varier au moins la hauteur d'eau et la vitesse de roulage du véhicule sur une chaussée quelconque permettant d'identifier une fonction décrivant de façon continue le vecteur énergétique identifié à l'étape 3005. Cette étape 1003 de la phase d'apprentissage permet d'évaluer la hauteur d'eau sur la chaussée à partir de la vitesse de roulage et du vecteur énergétique identifié à l'étape 3005 à l'aide de fonction au moins bilinéaire des paramètres vecteur énergétique et vitesse de roulage.

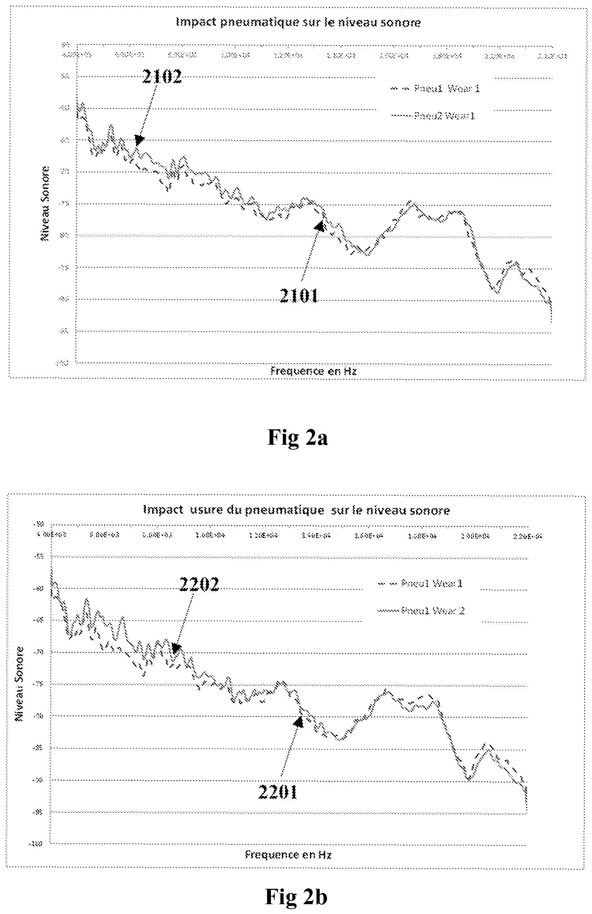

La Fig 2a présente les réponses sonores d'un véhicule roulant une chaussée présentant une hauteur d'eau déterminée à iso conditions de roulage stabilisée comme la vitesse de déplacement, la pression de gonflage, la charge portée. La courbe pointillée 2101 représente la réponse d'un premier pneumatique caractérisé par un schéma de creux spécifique de la bande de roulement de type « all seasons », conception en V. La courbe continue 2102 représente la réponse sonore d'un second pneumatique qui diffère par son schéma de creux du premier pneumatique par une conception de type « été » comprenant 4 sillons longitudinaux sur la largeur de la bande de roulement. Les réponses sonores des deux pneumatiques sont très proches. Cependant en fonction des bandes de fréquences, on observe des comportements différents entre les deux pneumatiques. En effet, le pneumatique de type été émet plus de bruit que le pneumatique de type all season dans une large bande de fréquences comprise entre 4 et 15 KHz. Puis au-delà de 15 KHz, le pneumatique de type all seasons est plus bruyant que le pneumatique de type été. Bien que ces variations du comportement sonore des deux pneumatiques soient concrètes, elles restent négligeables par rapport à une variation de vitesse de roulage ou de hauteur d'eau sur la chaussée.

La Fig 2b représente l'influence du niveau d'usure de la bande de roulement d'un même pneumatique roulant sur le même sol humide à iso conditions de roulage. La courbe pointillée 2201 représente la réponse d'un premier état d'usure. La courbé continue 2202 représente la réponse sonore du second état d'usure du pneumatique. Une fois de plus, la dynamique liée au niveau d'usure du pneumatique est faible. De plus, la sensibilité en fonction des bandes de fréquences s'inverse notamment aux alentours de 15Khz.

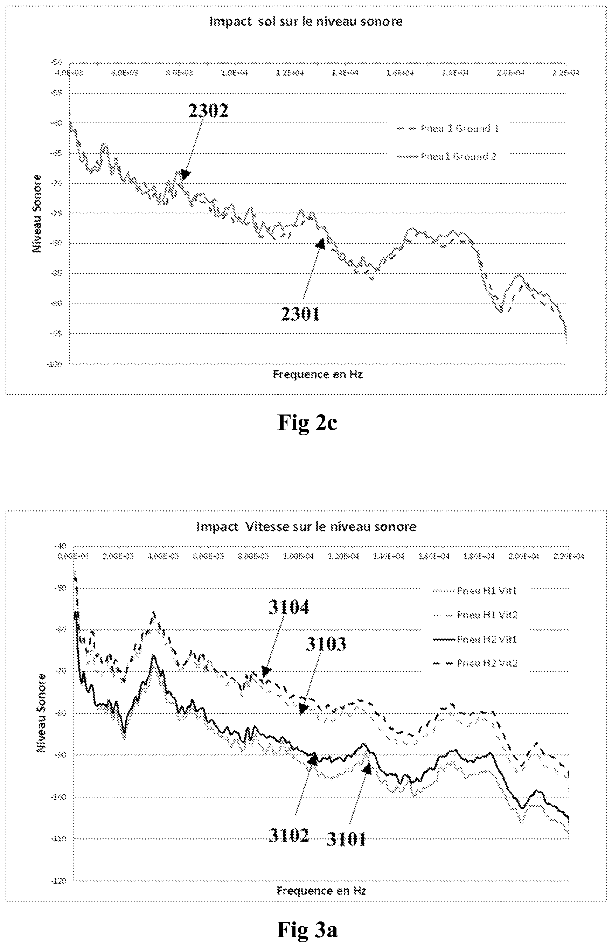

La Fig 2c représente l'influence du sol sur la réponse sonore d'un même pneumatique roulant sur la même hauteur d'eau à iso conditions de roulage. La courbe pointillée 2301 représente la réponse du pneumatique sur un premier sol. La courbe continue 2302 représente la réponse sonore du pneumatique roulant sur le second sol. Cette fois-ci, la dynamique liée à la nature du sol est faible.

La Fig 3a montre les réponses sonores d'un véhicule équipé des mêmes pneumatiques en particulier leur niveau d'usure, roulant sur la même chaussée humide, c'est-à-dire sur une même hauteur d'eau. Cependant, les courbes 3101 et 3102 en continue montrent les réponses sonores du véhicule lorsque celui-ci roule à 30 km/h sur deux hauteurs différentes. Tandis que les courbes pointillées 3103 et 3104 montrent les réponses sonores lors d'un roulage à 100 km/h sur les deux mêmes hauteurs d'eau. On note une très forte différence, bien plus significative que pour une variation de hauteur d'eau, entre les réponses sonores en fonction de la variable vitesse de roulage ce qui rend indispensable de prendre en compte au moins ce paramètre pour estimer la hauteur d'eau sur la chaussée.

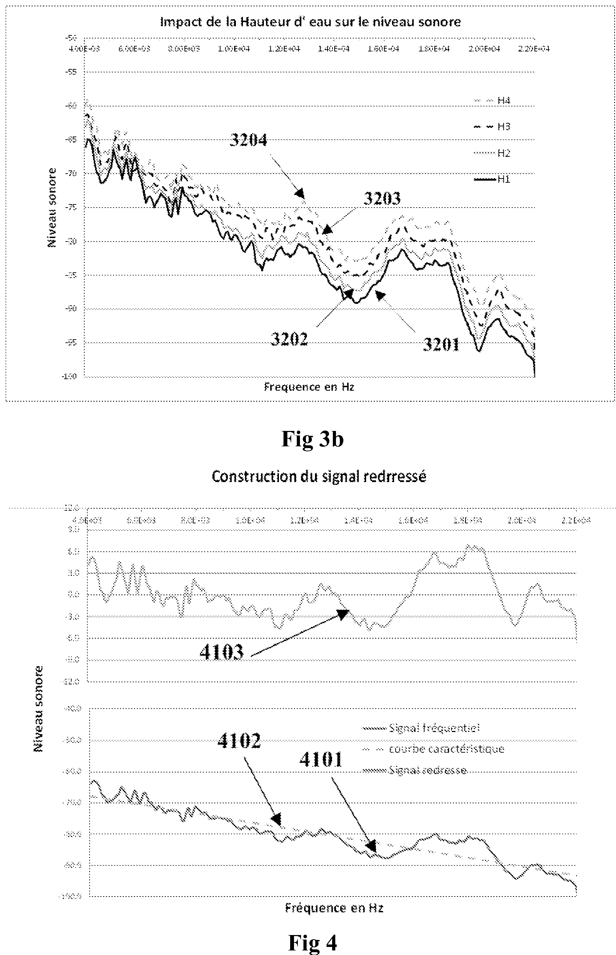

La fig 3b montre les réponses sonores d'un véhicule équipé des mêmes pneumatiques à iso conditions de roulage. Cependant, la chaussée sur laquelle roule le véhicule présente des hauteurs d'eau différentes entre les diverses réponses sonores allant de 300 à 1500 micromètres. Ces hauteurs ont été mesurées à l'aide d'un dispositif de mesure de type laboratoire. Il s'agit par exemple du dispositif MARWIS 8900.U03 de la société LUFT

L'ordre croissant des numérotations des courbes de réponses entre 3201 et 3204 correspond à l'ordre croissant de la hauteur d'eau sur la chaussée entre 300 et 1500 micromètres par pas de 375 micromètres environ. On note que ces courbes sont classées en matière de niveau d'amplitude selon la hauteur d'eau sur la chaussée. L'écart entre les courbes est significatif à partir de 4KHz. Et, plus la fréquence d'observation des réponses sonores augmentent, plus l'écart entre les réponses s'accroit en notant en particulier des franchissements de paliers à partir de 7 et 10 KHz. En effet entre 4 et 7KHz, la dynamique selon la hauteur d'eau est inférieure à 5 dB. entre 7 et 10 KHz, la dynamique est supérieure à 5 décibels et inférieur à 7 décibels. Au-delà de 10 KHz, on obtient une dynamique entre les courbes extremums pouvant atteindre et dépasser 10 décibels.

La Fig 4 illustre la construction d'un signal fréquentiel redressé à partir d'un signal fréquentiel selon un mode de réalisation préférentiel. Après avoir identifié la pente de la courbe caractéristique de la réponse sonore du véhicule selon l'étape 1002, on construit la courbe caractéristique du signal fréquentiel associée à la vitesse de roulage à partir du signal fréquentiel enregistré à l'étape 2003. Pour cela, il convient d'identifier un point de référence de cette courbe caractéristique ou plusieurs points si celle-ci est définie par morceaux. Ce point de référence correspond à la valeur pour une fréquence donnée de la courbe caractéristique associée à une vitesse de roulage. En raison de la plus faible dynamique de réponse pour les fréquences les plus basses, il est préférable de prendre ce point dans une bande de fréquences inférieures à 7 KHz. De plus, on peut prendre la valeur moyenne du signal fréquentiel sur une bande de fréquences peu sensible à la hauteur d'eau identifiée à l'étape 1001 de la phase d'apprentissage. Le graphe montre tout d'abord la courbe 4101 qui est le signal fréquentiel mesuré à l'étape 2003, la courbe caractéristique 4102, en pointillée, associée au signal fréquentiel qui est ici une courbe linéaire dont la pente sur la bande de fréquences 4KHZ à 22KHz a été identifiée à l'étape 1002 et dont un point de référence à 4KHz a été évalué comme la valeur médiane sur une bande de fréquence faiblement sensible à la hauteur d'eau autour de 4KHz selon l'étape 1001. Le signal fréquentiel redressé représenté par la courbe en gris gras 4103 est obtenu par la différence, en échelle logarithmique, entre le signal fréquentiel 4101 et la courbe caractéristique 4102.

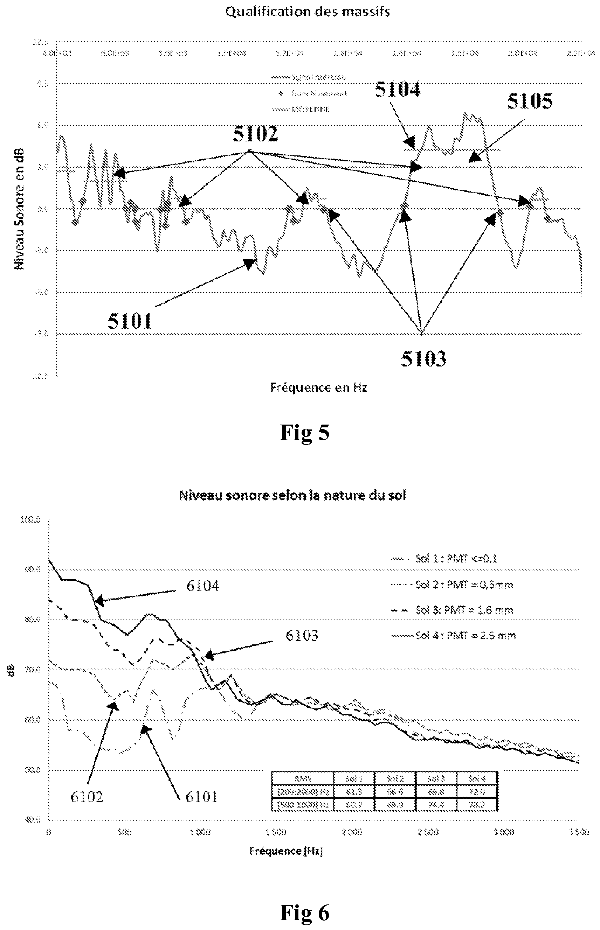

La Fig 5 représente le signal fréquentiel redressé 5101. Celui-ci oscille autour de la valeur nulle en représentation logarithmique. La première étape consiste à identifier les massifs positifs 5102 dans ce signal fréquentiel redressé. En effet, ces massifs dits positifs sont des contributeurs énergétiques important de la réponse sonore. A cet effet, on isole chaque massif situé au-dessus de la valeur nulle, délimité par deux fréquences correspondant aux franchissements 5103 de la valeur nulle. Ensuite il faut qualifier les massifs isolés au travers d'une métrique 5104 simple représentative de l'énergie sonore du massif. A cet effet, la valeur moyenne ou la valeur médiane du massif isolé est un bon estimateur de l'énergie sonore sans se préoccuper entièrement à la forme géométrique du massif. La valeur maximale du massif est un indicateur de l'énergie facile à mettre en oeuvre mais moins bien corrélé à l'énergie totale d'un massif. Enfin, il faut comparer cet estimateur du massif par rapport à un seuil afin de ne retenir que les massifs les plus énergétiques. A cet effet, un seuil de 3dB au-dessus de la valeur nulle est un bon indicateur permettant de ne retenir que quelques massifs. En ne retenant que ces massifs 5105, on s'assure d'avoir une dynamique forte sur le classement améliorant ainsi le pouvoir discriminant de la méthode.

Après avoir identifié les massifs les plus énergétiques, il convient de combiner cette sélection avec les massifs les plus sensibles à la hauteur d'eau. La combinaison de ces deux sélections permet d'identifier le massif le plus prometteur pour identifier la hauteur d'eau sur le sol puisque il sera à la fois parmi les plus sensibles à la hauteur d'eau assurant d'augmenter le pouvoir discriminant de la méthode. Mais ce massif sera aussi parmi les plus énergétiques permettant de l'identifier du spectre sonore complet. Ainsi, on construit une métrique efficace pour identifier la hauteur d'eau sur la chaussée notamment pour des hauteurs d'eau inférieures à 1,5 millimètre. Cette métrique efficace est l'intégrale de la partie du signal fréquentiel en échelle linéaire délimité par la bande de fréquences du massif qui est à la fois le plus énergétique et sensible à la hauteur d'eau.

Enfin il convient, une fois cette métrique évaluée et la vitesse de roulage du véhicule identifiée pour laquelle le signal fréquentiel a été obtenue, employer une fonction bilinéaire identifiée à l'étape 1003 liant la hauteur d'eau sur la chaussée, la métrique efficace du signal fréquentiel et la vitesse de roulage du véhicule pour identifier la hauteur d'eau sur la chaussée. Cette fonction bilinéaire est par exemple, le produit de deux fonctions de paramètres indépendants. Les paramètres indépendants sont d'une part la vitesse de roulage et d'autre part la métrique efficace qui est l'intégrale de la partie du signal fréquentiel en échelle linéaire. Le résultat de ce produit est directement la hauteur d'eau sur la chaussée.

La Fig 6 est une représentation du niveau sonore exprimé en échelle décibel avec un pas fréquentiel de plusieurs dizaines de Hertz. Ce type de représentation permet de mettre en exergue le niveau sonore global tout en limitant les modes isolés des composants mécaniques, que cela soit le véhicule ou l'ensemble monté. Dans ce cas, les enregistrements correspondent à une même vitesse de roulage du véhicule en ligne droite. Afin de limiter l'influence de l'eau sur la chaussée, la mesure microphone est réalisée sur la partie arrière du véhicule , par exemple au niveau du passage de roue du second essieu du véhicule. Dans ce cas, la hauteur d'eau résiduelle sur la chaussée suite au passage du premier essieu du véhicule est limitée et le poids de ce paramètre devient négligeable sur le niveau sonore enregistré par le microphone. Bien entendu, une mesure au niveau de l'essieu avant est aussi envisageable tant que la hauteur d'eau sur la chaussée est raisonnable. La qualification de la texture de la chaussée est pertinente pour de faibles hauteurs d'eau inférieure à 2 millimètres.

Les courbes 6101 à 6104 correspondent aux signatures sonores de divers sols dont la PMT (acronyme de Profondeur Moyenne de Texture) varie de moins de 0,1 millimètres correspondant à un sol lisse jusqu'à 2,6 millimètres pour un sol très rugueux en passant par deux stades intermédiaires. A basses fréquences, les courbes sont fortement différenciées. A partir de 2 KHz, la signature sonore de la chaussée est globalement plus impactée par la texture de la chaussée.

On calcule pour chaque courbe, la valeur RMS (acronyme en anglais de « Root Mean Square ») de la signature sonore sur une bande de fréquences sensibles à la texture de la chaussée. On associe ainsi, pour une vitesse donnée, la valeur RMS à une classe de texture de la chaussée dictée par la PMT. Ici, on évalue la valeur RMS sur deux bandes de fréquences, une fenêtre large de 200Hz à 2KHz et une fenêtre étroite de 500Hz à 1KHz. Le classement des signatures sonores par la valeur RMS reste inchangé quelle que soit la bande de fréquences d'analyse. Et l'écart entre les valeurs RMS est significatif et suffisamment discriminant.

## Revendications

1. Méthode d'estimation d'une hauteur d'eau sur une chaussée où roule un pneumatique d'un ensemble monté d'un véhicule, ledit ensemble monté étant placé dans un passage de roue dudit véhicule, préférentiellement un passage de roue lié au premier essieu du véhicule par rapport au sens d'avancement classique du véhicule comprenant les étapes suivantes :
- Fixer un capteur sur le véhicule ;
- Obtenir un signal fréquentiel dudit capteur correspondant au roulage du véhicule à vitesse V sur la chaussée recouverte d'une hauteur d'eau heau ;
- Isoler une partie du signal fréquentiel, bornée par deux fréquences F1 et F2, F1 étant inférieure à F2, qui est sensible à la hauteur d'eau heau ;
- Déterminer un vecteur énergétique liée à la partie du signal fréquentiel ;
- Obtenir la hauteur d'eau sur la chaussée à l'aide d'une fonction prenant en compte le vecteur énergétique et la vitesse V du véhicule ;
**caractérisée en ce que** le capteur est un microphone et **en ce que** la partie du signal fréquentiel s'étend en totalité au-delà de 4 kHz.

2. Méthode d'estimation d'une hauteur d'eau sur une chaussée où roule un pneumatique d'un ensemble monté selon la revendication 1 dans laquelle, le signal fréquentiel est la Densité Spectrale de Puissance, nommée DSP, d'un signal temporel discrétisé du microphone acquis lors du roulage du véhicule.

3. Méthode d'estimation d'une hauteur d'eau sur une chaussée où roule un pneumatique d'un ensemble monté selon la revendication 2 dans laquelle, le vecteur énergétique comprend la fonction intégrale de la DSP entre les fréquences F1 et F2.

4. Méthode d'estimation d'une hauteur d'eau sur une chaussée où roule un pneumatique d'un ensemble monté selon l'une des revendications 1 à 3 dans laquelle la partie du signal fréquentiel se limite à au moins un massif dont une valeur caractéristique est supérieure à un seuil relatif au signal fréquentiel.

5. Méthode d'estimation d'une hauteur d'eau sur une chaussée où roule un pneumatique d'un ensemble monté selon l'une des revendications 1 à 4 dans laquelle l'étape pour isoler une partie du signal fréquentiel comprend la construction d'un signal fréquentiel redressé comme étant la comparaison entre le signal fréquentiel et une courbe caractéristique du signal fréquentiel.

6. Méthode d'estimation d'une hauteur d'eau sur une chaussée où roule un pneumatique d'un ensemble monté selon la revendication 5 dans laquelle la courbe caractéristique du signal fréquentiel est continûment décroissante au-delà de 4KHz .

7. Méthode d'estimation d'une hauteur d'eau sur une chaussée où roule un pneumatique d'un ensemble monté selon l'une des revendications 5 à 6 prise en combinaison avec la revendication 4 dans laquelle le au moins un massif du signal fréquentiel est délimité par le franchissement d'une valeur spécifique par le signal fréquentiel redressé.

8. Méthode d'estimation d'une hauteur d'eau sur une chaussée où roule un pneumatique d'un ensemble monté selon l'une des revendications 4 et 5 à 7 prise en combinaison avec la revendication 4 dans laquelle la valeur caractéristique du au moins un massif est compris dans le groupe comprenant valeur maximale, valeur moyenne, valeur médiane.

9. Méthode d'estimation d'une hauteur d'eau sur une chaussée où roule un pneumatique d'un ensemble monté selon l'une des revendications 4 et 5 à 8 prise en combinaison avec la revendication 4 dans laquelle, le signal fréquentiel étant exprimé en échelle logarithmique, le seuil est la valeur 3dB, préférentiellement 4dB, très préférentiellement 5dB.

10. Méthode d'estimation d'une hauteur d'eau sur une chaussée où roule un pneumatique d'un ensemble monté selon l'une des revendications 1 à 9 dans laquelle une sensibilité des bandes de fréquences du signal fréquentiel à la hauteur d'eau est effectuée dans une étape d'apprentissage où le véhicule, équipé du microphone, roule sur une chaussé présentant au moins deux hauteurs d'eau différentiables.

11. Méthode d'estimation d'une hauteur d'eau sur une chaussée où roule un pneumatique d'un ensemble monté selon l'une des revendications 1 à 10 dans laquelle, le pneumatique comprenant un vecteur d'identification, la méthode comprend une étape d'obtention de l'identification du pneumatique afin d'obtenir au moins une caractéristique géométrique du pneumatique, et la fonction d'obtention de la hauteur d'eau prend en compte la au moins une caractéristique géométrique dudit pneumatique.

12. Méthode d'estimation d'une hauteur d'eau sur une chaussée où roule un pneumatique d'un ensemble monté selon l'une des revendications 1 à 11 dans laquelle, la méthode comprend une étape d'obtention de l'état d'usure du pneumatique et la fonction d'obtention de la hauteur d'eau prend en compte l'état d'usure du pneumatique

13. Méthode d'estimation d'une hauteur d'eau sur une chaussée où roule un pneumatique d'un ensemble monté selon l'une des revendications 1 à 12 dans laquelle la méthode comprend une étape d'obtention de la texture de la chaussée, préférentiellement la PMT du sol à une échelle millimétrique, et la fonction d'obtention de la hauteur d'eau prend en compte la texture de la chaussée.

14. Méthode d'estimation d'une hauteur d'eau sur une chaussée où roule un pneumatique d'un ensemble monté selon l'une des revendications 1 à 13 dans laquelle, la fixation du capteur a lieu au niveau du passage de roue.

15. Méthode d'estimation d'une hauteur d'eau sur une chaussée où roule un pneumatique d'un ensemble monté selon l'une des revendications 14 dans laquelle, la fixation du capteur a lieu dans la partie arrière du passage de roue par rapport au plan OYZ de l'ensemble monté, préférentiellement dans un secteur angulaire compris entre 270° et 315° par rapport à l'axe Y du repère géométrique du pneumatique.

## Patentansprüche

1. Verfahren zum Schätzen einer Wasserhöhe auf einer Fahrbahn, auf der ein Luftreifen einer montierten Einheit eines Fahrzeugs rollt, wobei die montierte Einheit in einem Radkasten des Fahrzeugs platziert ist, vorzugsweise einem Radkasten, der mit der ersten Radachse des Fahrzeugs bezüglich der klassischen Vorwärtsbewegungsrichtung des Fahrzeugs verbunden ist, das die folgenden Schritte enthält:
- Befestigen eines Sensors am Fahrzeug;
- Erhalt eines Frequenzsignals vom Sensor entsprechend dem Fahren des Fahrzeugs mit einer Geschwindigkeit V auf der mit einer Wasserhöhe heau bedeckten Fahrbahn;
- Isolieren eines Teils des Frequenzsignals, begrenzt von zwei Frequenzen F1 und F2, wobei F1 niedriger ist als F2, der auf die Wasserhöhe heau empfindlich reagiert;
- Bestimmen eines mit dem Teil des Frequenzsignals verbundenen Energievektors;
- Erhalt der Wasserhöhe auf der Fahrbahn mit Hilfe einer Funktion, die den Energievektor und die Geschwindigkeit V des Fahrzeugs berücksichtigt;
**dadurch gekennzeichnet, dass** der Sensor ein Mikrofon ist, und dass der Teil des Frequenzsignals sich insgesamt über 4 kHz hinaus erstreckt.

2. Verfahren zum Schätzen einer Wasserhöhe auf einer Fahrbahn, auf der ein Luftreifen einer montierten Einheit rollt, nach Anspruch 1, wobei das Frequenzsignal die spektrale Leistungsdichte, genannt PSD, eines beim Fahren des Fahrzeugs erfassten diskretisierten Zeitsignals des Mikrofons ist.

3. Verfahren zum Schätzen einer Wasserhöhe auf einer Fahrbahn, auf der ein Luftreifen einer montierten Einheit rollt, nach Anspruch 2, wobei der Energievektor die Integralfunktion der PSD zwischen den Frequenzen F1 und F2 enthält.

4. Verfahren zum Schätzen einer Wasserhöhe auf einer Fahrbahn, auf der ein Luftreifen einer montierten Einheit rollt, nach einem der Ansprüche l bis 3, wobei der Teil des Frequenzsignals auf mindestens ein Massiv beschränkt ist, von dem ein charakteristischer Wert höher als eine Schwelle bezüglich des Frequenzsignals ist.

5. Verfahren zum Schätzen einer Wasserhöhe auf einer Fahrbahn, auf der ein Luftreifen einer montierten Einheit rollt, nach einem der Ansprüche 1 bis 4, wobei der Schritt zum Isolieren eines Teils des Frequenzsignals die Konstruktion eines gleichgerichteten Frequenzsignals als der Vergleich zwischen dem Frequenzsignal und einer Kennlinie des Frequenzsignals enthält.

6. Verfahren zum Schätzen einer Wasserhöhe auf einer Fahrbahn, auf der ein Luftreifen einer montierten Einheit rollt, nach Anspruch 5, wobei die Kennlinie des Frequenzsignals jenseits von 4 KHz kontinuierlich abnimmt.

7. Verfahren zum Schätzen einer Wasserhöhe auf einer Fahrbahn, auf der ein Luftreifen einer montierten Einheit rollt, nach einem der Ansprüche 5 bis 6 in Kombination mit Anspruch 4, wobei das mindestens eine Massiv des Frequenzsignals vom Überschreiten eines spezifischen Werts durch das gleichgerichtete Frequenzsignal begrenzt wird.

8. Verfahren zum Schätzen einer Wasserhöhe auf einer Fahrbahn, auf der ein Luftreifen einer montierten Einheit rollt, nach einem der Ansprüche 4 und 5 bis 7 in Kombination mit Anspruch 4, wobei der Kennwert des mindestens einen Massivs in der Gruppe enthalten ist, die den Maximalwert, den Mittelwert, den Medianwert enthält.

9. Verfahren zum Schätzen einer Wasserhöhe auf einer Fahrbahn, auf der ein Luftreifen einer montierten Einheit rollt, nach einem der Ansprüche 4 und 5 bis 8 in Kombination mit Anspruch 4, wobei, da das Frequenzsignal in einer logarithmischem Skala ausgedrückt wird, die Schwelle der Wert 3dB, vorzugsweise 4dB, sehr bevorzugt 5dB ist.

10. Verfahren zum Schätzen einer Wasserhöhe auf einer Fahrbahn, auf der ein Luftreifen einer montierten Einheit rollt, nach einem der Ansprüche 1 bis 9, wobei eine Empfindlichkeit der Frequenzbänder des Frequenzsignals für die Wasserhöhe in einem Lernschritt ausgeführt wird, in dem das mit dem Mikrofon ausgestattete Fahrzeug auf einer Fahrbahn fährt, die mindestens zwei unterscheidbare Wasserhöhen aufweist.

11. Verfahren zum Schätzen einer Wasserhöhe auf einer Fahrbahn, auf der ein Luftreifen einer montierten Einheit rollt, nach einem der Ansprüche 1 bis 10, wobei, da der Lufttreifen einen Identifikationsvektor enthält, das Verfahren einen Schritt des Erhalts der Identifikation des Luftreifens enthält, um mindestens eine geometrische Charakteristik des Luftreifens zu erhalten, und die Funktion des Erhalts des Wasserhöhe den mindestens einen geometrischen Kennwert des Luftreifens berücksichtigt.

12. Verfahren zum Schätzen einer Wasserhöhe auf einer Fahrbahn, auf der ein Luftreifen einer montierten Einheit rollt, nach einem der Ansprüche 1 bis 11, wobei das Verfahren einen Schritt des Erhalts des Verschleißzustands des Luftreifens enthält, und die Funktion des Erhalts der Wasserhöhe den Verschleißzustand des Luftreifens berücksichtigt.

13. Verfahren zum Schätzen einer Wasserhöhe auf einer Fahrbahn, auf der ein Luftreifen einer montierten Einheit rollt, nach einem der Ansprüche 1 bis 12, wobei das Verfahren einen Schritt des Erhalts der Textur der Fahrbahn enthält, vorzugsweise die MTD des Bodens auf einer Millimeterskala, und die Funktion des Erhalts des Wasserhöhe berücksichtigt die Textur der Fahrbahn.

14. Verfahren zum Schätzen einer Wasserhöhe auf einer Fahrbahn, auf der ein Luftreifen einer montierten Einheit rollt, nach einem der Ansprüche 1 bis 13, wobei die Befestigung des Sensors im Bereich des Radkastens erfolgt.

15. Verfahren zum Schätzen einer Wasserhöhe auf einer Fahrbahn, auf der ein Luftreifen einer montierten Einheit rollt, nach Ansprüche 14, wobei die Befestigung des Sensors im hinteren Teil des Radkastens bezüglich der Ebene OYZ der montierten Einheit erfolgt, vorzugsweise in einem Winkelsektor zwischen 270° und 315° bezüglich der Y-Achse des geometrischen Bezugssystems des Luftreifens.

## Claims

1. Method for estimating a water height on a roadway where a tyre of a mounted set of a vehicle is running, said mounted set being placed in a wheel arch of said vehicle, preferentially a wheel arch linked to the first axle of the vehicle in relation to the conventional direction of advance of the vehicle, comprising the following steps:
- fixing a sensor onto the vehicle;
- obtaining a frequency signal from said sensor corresponding to the running of the vehicle at speed V on the roadway covered with a water height heau;
- isolating a part of the frequency signal, bounded by two frequencies F1 and F2, F1 being lower than F2, which is sensitive to the water height heau;
- determining an energy vector linked to the part of the frequency signal;
- obtaining the water height on the roadway using a function taking account of the energy vector and the speed V of the vehicle;
**characterized in that** the sensor is a microphone and **in that** the part of the frequency signal extends in total beyond 4 kHz.

2. Method for estimating a water height on a roadway where a tyre of a mounted set is running according to Claim 1, wherein the frequency signal is the power spectral density, called PSD, of a discretised temporal signal from the microphone acquired while the vehicle is running.

3. Method for estimating a water height on a roadway where a tyre of a mounted set is running according to Claim 2, wherein the energy vector comprises the integral function of the PSD between the frequencies F1 and F2.

4. Method for estimating a water height on a roadway where a tyre of a mounted set is running according to Claims 1 to 3, wherein the part of the frequency signal is limited to at least one block of which a characteristic value is above a threshold relative to the frequency signal.

5. Method for estimating a water height on a roadway where a tyre of a mounted set is running according to one of Claims 1 to 4, wherein the step for isolating a part of the frequency signal comprises the construction of a rectified frequency signal as being the comparison between the frequency signal and a characteristic curve of the frequency signal.

6. Method for estimating a water height on a roadway where a tyre of a mounted set is running according to Claim 5, wherein the characteristic curve of the frequency signal is continually decreasing beyond 4 kHz.

7. Method for estimating a water height on a roadway where a tyre of a mounted set is running according to one of Claims 5 and 6 taken in combination with Claim 4, wherein the at least one block of the frequency signal is delimited by the crossing of a specific value by the rectified frequency signal.

8. Method for estimating a water height on a roadway where a tyre of a mounted set is running according to one of Claims 4 and 5 to 7 taken in combination with Claim 4, wherein the characteristic value of the at least one block lies in the group comprising maximum value, average value, median value.

9. Method for estimating a water height on a roadway where a tyre of a mounted set is running according to one of Claims 4 and 5 to 8 taken in combination with Claim 4, wherein, the frequency signal being expressed in logarithmic scale, the threshold is the value 3dB, preferentially 4dB, very preferentially 5dB.

10. Method for estimating a water height on a roadway where a tyre of a mounted set is running according to one of Claims 1 to 9, wherein a sensitivity step of the frequency bands of the frequency signal to the water height is effected in a learning step in which the vehicle, equipped with the microphone, runs on a roadway having at least two water heights that can be differentiated.

11. Method for estimating a water height on a roadway where a tyre of a mounted set is running according to one of Claims 1 to 10, wherein, the tyre comprising an identification vector, the method comprises a step of obtaining the identification of the tyre in order to obtain at least one geometrical characteristic of the tyre, and the function of obtaining the water height takes account of the at least one geometrical characteristic of said tyre.

12. Method for estimating a water height on a roadway where a tyre of a mounted set is running according to one of Claims 1 to 11, wherein the method comprises a step of obtaining the state of wear of the tyre and the function of obtaining the water height takes account of the state of wear of the tyre.

13. Method for estimating a water height on a roadway where a tyre of a mounted set is running according to one of Claims 1 to 12, wherein the method comprises a step of obtaining the texture of the roadway, preferentially the MTD of the ground to a millimetric scale, and the function of obtaining the water height takes account of the texture of the roadway.

14. Method for estimating a water height on a roadway where a tyre of a mounted set is running according to one of Claims 1 to 13, wherein the fixing of the sensor takes place in the wheel arch.

15. Method for estimating a water height on a roadway where a tyre of a mounted set is running according to Claims 14, wherein the fixing of the sensor takes place in the rear part of the wheel arch with respect to the plane OYZ of the mounted set, preferentially in an angular sector lying between 270° and 315° with respect to axis Y of the geometrical reference frame of the tyre.
